(19) **Europäisches Patentamt**
**European Patent Office**
**Office européen des brevets**

(11) **EP 4 451 747 A1**

(12) **EUROPEAN PATENT APPLICATION**
published in accordance with Art. 153(4) EPC

(43) Date of publication:
**23.10.2024 Bulletin 2024/43**

(21) Application number: **22921749.2**

(22) Date of filing: **28.12.2022**

(51) International Patent Classification (IPC):
***H04W 52/02*** (2009.01)   ***H04W 24/02*** (2009.01)

(52) Cooperative Patent Classification (CPC):
**H04W 24/02; H04W 36/00; H04W 36/08; H04W 36/16; H04W 36/26; H04W 52/02; H04W 52/18; H04W 88/10;** Y02D 30/70

(86) International application number:
**PCT/CN2022/142710**

(87) International publication number:
**WO 2023/138329 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.01.2022 CN 202210061152**

(71) Applicant: **Huawei Technologies Co., Ltd.
Shenzhen, Guangdong 518129 (CN)**

(72) Inventors:
• **LI, Xiaowen
  Shenzhen, Guangdong 518129 (CN)**
• **GENG, Xinli
  Shenzhen, Guangdong 518129 (CN)**
• **ZHAO, Nan
  Shenzhen, Guangdong 518129 (CN)**
• **LI, Xiaowen
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **BASE STATION ENERGY-SAVING METHOD AND APPARATUS**

(57)    Embodiments of this application provide a base station energy saving method and apparatus applied to the field of communication technologies. The method includes: determining, for one or more low-energy-efficiency cells in a low-energy-efficiency cell set, a high-energy-efficiency cell paired with each low-energy-efficiency cell from a high-energy-efficiency cell set, where a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set; and sending indication information to a base station of the low-energy-efficiency cell or a management network element configured to manage the low-energy-efficiency cell, where the indication information indicates to hand over user equipment in the low-energy-efficiency cell to the high-energy-efficiency cell paired with the low-energy-efficiency cell. According to embodiments of this application, the user equipment in the low-energy-efficiency cell may be handed over to the high-energy-efficiency cell paired with the low-energy-efficiency cell, to improve energy saving efficiency of the base station.

FIG. 4

**Description**

This application claims priority to Chinese Patent Application No. 202210061152.7, filed with the China National Intellectual Property Administration on January 19, 2022 and entitled "BASE STATION ENERGY SAVING METHOD AND APPARATUS", which is incorporated herein by reference in its entirety.

**TECHNICAL FIELD**

This application relates to the field of communication technologies, and specifically, to a base station energy saving method and apparatus.

**BACKGROUND**

With the development of wireless communication technologies, more radio access technologies (Radio Access Technologies, RATs) are applied. These different RATs include a global system for mobile communications (Global System for Mobile Communications, GSM) technology, a wideband code division multiple access (Wideband Code Division Multiple Access, WCDMA) technology, a world interoperability for microwave access (World Interoperability for Microwave Access, WiMax) technology, a long term evolution (Long Term Evolution, LTE) technology, an air interface evolution (Air Interface Evolution, AIE) technology, a code division multiple access (Code Division Multiple Access, CDMA) 2000 technology, and the like. These different radio access technologies are used by base station systems of different standards. Frequency bands of different standards are different, and there may be a plurality of frequency bands in one standard. If a base station can support a plurality of radio access technologies, the base station is referred to as a multi-standard base station. The multi-standard base station may have a plurality of cells of different standards (that is, different frequency bands). If a plurality of cells of a base station have different frequency bands, the base station is referred to as a multi-band base station.

With the development of a multi-standard base station and a multi-band base station, more physical areas are covered by a plurality of cells of different frequency bands. Therefore, user equipment can access more cells, making it possible to migrate the user equipment to implement energy saving of the base station.

Currently, energy saving is typically implemented by shutting down a cell with low traffic and a small number of users and handing over user equipment in the cell to another cell. However, this method has low energy saving efficiency. Therefore, how to improve energy saving efficiency of the base station is a research focus currently.

**SUMMARY**

Embodiments of this application provide a base station energy saving method and apparatus. According to solutions of embodiments of this application, user equipment in a low-energy-efficiency cell may be handed over to a high-energy-efficiency cell paired with the low-energy-efficiency cell, to improve energy saving efficiency of a base station.

According to a first aspect, an embodiment of this application provides a base station energy saving method. The method includes:

determining, for one or more low-energy-efficiency cells in a low-energy-efficiency cell set, a high-energy-efficiency cell paired with each low-energy-efficiency cell from a high-energy-efficiency cell set, where a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set; and
sending indication information to a base station of the low-energy-efficiency cell or a management network element configured to manage the low-energy-efficiency cell, where the indication information indicates to hand over user equipment in the low-energy-efficiency cell to the high-energy-efficiency cell paired with the low-energy-efficiency cell.

In this embodiment of this application, cells may be classified based on energy efficiency. The high-energy-efficiency cell is used as a cell paired with the low-energy-efficiency cell. In this way, the indication information is sent to the base station or the management network element, so that the user equipment in the low-energy-efficiency cell is handed over to the high-energy-efficiency cell paired with the low-energy-efficiency cell. When a same quantity of user equipments access a cell, energy consumption of the low-energy-efficiency cell is higher than energy consumption of the high-energy-efficiency cell. Therefore, the high-energy-efficiency cell is used as the cell paired with the low-energy-efficiency cell, and the user equipment in the low-energy-efficiency cell is handed over to the high-energy-efficiency cell paired with the low-energy-efficiency cell, to improve energy saving efficiency of the base station.

In a feasible embodiment, the one or more low-energy-efficiency cells include a shutdown cell, and the indication information specifically indicates to shut down the shutdown cell.

In this embodiment of this application, the low-energy-efficiency cell may be shut down for energy saving, to implement user equipment handover. According to the method, the low-energy-efficiency cell is shut down to reduce energy consumption caused by the low-energy-efficiency cell, to further improve the energy saving efficiency of the base station.

In a feasible embodiment, the low-energy-efficiency cell set and the high-energy-efficiency cell set include N cells in total, and the method further includes:

determining, as the shutdown cell a cell that is in the low-energy-efficiency cell set and whose sum of target traffic in a plurality of time periods is less than a first threshold, where target traffic of the low-energy-efficiency cell in a first time period is traffic of the low-energy-efficiency cell when total energy consumption of the N cells for bearing first total traffic is the lowest, the first total traffic is a sum of original traffic of the N cells in the historical first time period, and the first time period is any one of the plurality of time periods.

In this embodiment of this application, target traffic of the N cells may be calculated, and the target traffic may minimize the total energy consumption of the N cells for bearing the first total traffic. Further, the shutdown cell is determined based on the target traffic, and specifically, the cell that is in the low-energy-efficiency cell set and whose sum of target traffic in the plurality of time periods is less than the first threshold is determined as the shutdown cell. According to the method, the target traffic that may minimize the total energy consumption of the N cells is determined, and then the shutdown cell is determined based on the target traffic, so that the total energy consumption of the N cells is minimized while the user equipment is handed over from the low-energy-efficiency cell to the high-energy-efficiency cell, to further improve the energy saving efficiency of the base station. It may be understood that, the sum of target traffic of the low-energy-efficiency cell is less than the first threshold, that is, a quantity of user equipments accessing the cell is small, and energy consumption caused by working of the low-energy-efficiency cell is high. Therefore, the low-energy-efficiency cell may be shut down to reduce the energy consumption.

In a feasible embodiment, the indication information further includes shutdown time of the shutdown cell, and the shutdown time is consecutive time periods in which the target traffic of the shutdown cell is less than a second threshold.

In this embodiment of this application, if a sum of target traffic of the low-energy-efficiency cell in consecutive time periods is less than the second threshold, it indicates that a quantity of user equipments accessing the low-energy-efficiency cell in the consecutive time periods always remains small. Therefore, the consecutive time periods may be determined as the shutdown time, to reduce unnecessary energy consumption.

In a feasible embodiment, the one or more low-energy-efficiency cells include a to-be-adjusted cell, and the indication information specifically indicates to adjust a measurement start threshold and a measurement stop threshold of the to-be-adjusted cell.

In this embodiment of this application, the measurement start threshold and the measurement stop threshold of the low-energy-efficiency cell may be adjusted to implement user equipment handover. According to the method, communication inconvenience caused to a user by directly shutting down a cell accessed by a large quantity of user equipments may be avoided.

In a feasible embodiment, the low-energy-efficiency cell set and the high-energy-efficiency cell set include the N cells in total, and the method further includes:

determining, as the to-be-adjusted cell a cell that is in the low-energy-efficiency cell set and whose sum of target traffic in the plurality of time periods is greater than a third threshold, where target traffic of the to-be-adjusted cell in a second time period is traffic of the to-be-adjusted cell when total energy consumption of the N cells for bearing second total traffic is the lowest, the second total traffic is a sum of original traffic of the N cells in the historical second time period, and the second time period is any one of the plurality of time periods.

In this embodiment of this application, if a sum of target traffic of the low-energy-efficiency cell in the consecutive time periods is greater than the third threshold, it indicates that a quantity of user equipments accessing the low-energy-efficiency cell in the consecutive time periods always remains large. Therefore, the low-energy-efficiency cell may be adjusted to avoid communication inconvenience caused to a user by directly shutting down the cell.

In a feasible embodiment, the indication information further includes a target measurement start threshold and a target measurement stop threshold of the to-be-adjusted cell, and the target measurement start threshold and the target measurement stop threshold are determined based on the target traffic of the to-be-adjusted cell.

In this embodiment of this application, the target traffic of the N cells may be calculated, and the target traffic may minimize the total energy consumption of the N cells for bearing the second total traffic. Further, the target traffic of the to-be-adjusted cell is determined based on the target traffic. According to the method, the target traffic that may minimize the total energy consumption of the N cells is determined, and then the target traffic of the to-be-adjusted cell is determined based on the target traffic, so that the total energy consumption of the N cells is minimized while the user equipment is handed over from the low-energy-efficiency cell to the high-energy-efficiency cell, to further improve the energy saving efficiency of the base station.

In a feasible embodiment, the method further includes:

calculating costs of each cell in a third time period based on original traffic and energy consumption of each cell in the third time period, where the third time period is one of the plurality of time periods;

optimizing predicted traffic of the N cells by minimizing an objective function, to obtain predicted traffic of the N cells in the third time period, where the objective function is a sum of data items corresponding to the N cells, and the data items are determined based on costs of the cells and the predicted traffic;

calculating the total energy consumption of the N cells based on the obtained predicted traffic of the N cells;

when the total energy consumption is the lowest, determining the predicted traffic of the N cells as target traffic of the N cells in the third time period; and

when the total energy consumption is not the lowest, removing one or more data items from the objective function, where both predicted traffic and target traffic of a cell corresponding to the removed data item are 0.

In this embodiment of this application, target traffic of the N cells in a time period may be calculated, and the target traffic may minimize total energy consumption of the N cells for bearing total traffic in the time period.

In a feasible embodiment, the high-energy-efficiency cell includes a mid-level energy-efficiency cell and a high-level energy-efficiency cell, and energy efficiency of the mid-level energy-efficiency cell is lower than energy efficiency of the high-level energy-efficiency cell. The method further includes:

determining a second paired cell of the mid-level energy-efficiency cell from the high-level energy-efficiency cell; and

handing over user equipment in the mid-level energy-efficiency cell to the second paired cell of the mid-level energy-efficiency cell.

In this embodiment of this application, the high-energy-efficiency cell may be further classified, so that a paired cell may be determined more accurately.

In a feasible embodiment, the high-energy-efficiency cell includes at least two cells, and determining a first paired cell of the low-energy-efficiency cell from the high-energy-efficiency cell includes:

obtaining a measurement report MR in which the low-energy-efficiency cell is used as a primary serving cell;

determining a quantity of occurrences of each cell in the high-energy-efficiency cell set in the MR; and

using N cells with a largest quantity of occurrences as first paired cells of the low-energy-efficiency cell.

In this embodiment of this application, the paired cell of the low-energy-efficiency cell may be determined by using the MR, to ensure that the paired cell of the low-energy-efficiency cell can cover as many user equipments as possible in the low-energy-efficiency cell, and ensure normal communication of the user while implementing energy saving of the base station.

In a feasible embodiment, a reference signal received power RSRP level value of the first paired cell of the low-energy-efficiency cell is greater than a preset value.

In this embodiment of this application, a paired cell of the low-energy-efficiency cell may be determined by using an RSRP level value, to ensure that the RSRP level value of the paired cell of the low-energy-efficiency cell is in a normal range, and ensure communication quality of the user while implementing energy saving of the base station. It should be noted that, when the RSRP level value of the cell is excessively low, communication quality of user equipment that performs communication in the cell is poor.

According to a second aspect, an embodiment of this application further provides a base station energy saving apparatus. The apparatus includes:

a pairing unit, configured to determine, for one or more low-energy-efficiency cells in a low-energy-efficiency cell set, a high-energy-efficiency cell paired with each low-energy-efficiency cell from a high-energy-efficiency cell set, where a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set; and

a sending unit, configured to send indication information to a base station of the low-energy-efficiency cell or a management network element configured to manage the low-energy-efficiency cell, where the indication information indicates to hand over user equipment in the low-energy-efficiency cell to the high-energy-efficiency cell paired with the low-energy-efficiency cell.

In a feasible embodiment, the one or more low-energy-efficiency cells include a shutdown cell, and the indication information specifically indicates to shut down the shutdown cell.

In a feasible embodiment, the low-energy-efficiency cell set and the high-energy-efficiency cell set include N cells in total, the apparatus further includes a determining unit, and the determining unit is configured to: determine, as the shutdown cell a cell that is in the low-energy-efficiency cell set and whose sum of target traffic in a plurality of time periods is less than a first threshold, where target traffic of the low-energy-efficiency cell in a first time period is traffic of the low-energy-efficiency cell when total energy consumption of the N cells for bearing first total traffic is the lowest, the first total traffic is a sum of original traffic of the N cells in the historical first time period, and the first time period is any one of the plurality of time periods.

In a feasible embodiment, the indication information further includes shutdown time of the shutdown cell, and the shutdown time is consecutive time periods in which the target traffic of the shutdown cell is less than a second threshold.

In a feasible embodiment, the one or more low-energy-efficiency cells include a to-be-adjusted cell, and the indication information specifically indicates to adjust a measurement start threshold and a measurement stop threshold of the to-be-adjusted cell.

In a feasible embodiment, the low-energy-efficiency cell set and the high-energy-efficiency cell set include N cells in total, the apparatus further includes the determining unit, and the determining unit is configured to: determine, as the to-be-adjusted cell, a cell that is in the low-energy-efficiency cell set and whose sum of target traffic in the plurality of time periods is greater than a third threshold, where target traffic of the to-be-adjusted cell in a second time period is traffic of the to-be-adjusted cell when total energy consumption of the N cells for bearing second total traffic is the lowest, the second total traffic is a sum of original traffic of the N cells in the historical second time period, and the second time period is any one of the plurality of time periods.

In a feasible embodiment, the indication information further includes a target measurement start threshold and a target measurement stop threshold of the to-be-adjusted cell, and the target measurement start threshold and the target measurement stop threshold are based on the target traffic of the to-be-adjusted cell.

In a feasible embodiment, the high-energy-efficiency cell set includes at least two cells, and the pairing unit is configured to:

obtain a measurement report MR in which the low-energy-efficiency cell is used as a primary serving cell;
determine a quantity of occurrences of each cell in the high-energy-efficiency cell set in the MR; and
use a cell with a largest quantity of occurrences as a high-energy-efficiency cell paired with the low-energy-efficiency cell.

In a feasible embodiment, a reference signal received power RSRP level value of the high-energy-efficiency cell paired with the low-energy-efficiency cell is greater than a preset value.

According to a third aspect, an embodiment of this application provides a base station energy saving apparatus, including a processor and a memory. The processor is connected to the memory, the memory is configured to store program code, and the processor is configured to invoke the program code to perform the base station energy saving method according to any one of the possible implementations of any one of the foregoing aspects.

According to a fourth aspect, this application provides a computer storage medium, including computer instructions. When the computer instructions are run on an electronic device, a communication apparatus is enabled to perform the base station energy saving method according to any one of the possible implementations of any one of the foregoing aspects.

According to a fifth aspect, this application provides a computer program product. When the computer program product runs on a computer, the computer is enabled to perform the base station energy saving method according to any one of the possible implementations of any one of the foregoing aspects.

According to a sixth aspect, this application provides a chip, including a processor and an interface. The processor and the interface cooperate with each other, to enable the chip to perform the base station energy saving method according to any one of the possible implementations of any one of the foregoing aspects.

These or other aspects of this application are more concise and easier to understand in descriptions of the following embodiments.

## BRIEF DESCRIPTION OF DRAWINGS

The following describes accompanying drawings used in embodiments of this application.

FIG. 1 is a schematic diagram of a possible communication system according to an embodiment of this application;
FIG. 2 is a schematic diagram of another possible communication system according to an embodiment of this application;
FIG. 3 is a schematic flowchart of a base station energy saving method according to an embodiment of this application;
FIG. 4 is a schematic flowchart of another base station energy saving method according to an embodiment of this application;

FIG. 5 is a schematic diagram of classification of N cells according to an embodiment of this application;

FIG. 6 is a schematic flowchart of a method for determining target traffic according to an embodiment of this application;

FIG. 7 is a schematic diagram of a minimum cost flowchart according to an embodiment of this application;

FIG. 8 is a schematic flowchart of a method for generating indication information according to an embodiment of this application;

FIG. 9 is a schematic diagram of user equipment handover according to an embodiment of this application;

FIG. 10 is a schematic diagram of a structure of a base station energy saving apparatus 100 according to an embodiment of this application; and

FIG. 11 is a schematic diagram of a structure of another base station energy saving apparatus 110 according to an embodiment of this application.

## DESCRIPTION OF EMBODIMENTS

The following describes embodiments of this application with reference to the accompanying drawings in embodiments of this application. It should be noted that, in this application, terms such as "example" or "for example" are used to represent giving an example, an instance, or an illustration. Any embodiment or design scheme described as an "example" or "for example" in this application should not be construed as being more preferred or advantageous than other embodiments or design schemes. Exactly, use of the word "example", "for example", or the like is intended to present a related concept in a specific manner.

In embodiments of this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one item (piece) of a, b, or c may represent a, b, c, (a and b), (a and c), (b and c), or (a, b, and c), where a, b, and c may be singular or plural. The term "and/or" describes an association relationship between associated objects and represents that three relationships may exist. For example, A and/or B may represent the following three cases: Only A exists, both A and B exist, and only B exists, where A and B may be singular or plural. The character "/" generally indicates an "or" relationship between the associated objects.

In addition, unless otherwise specified, ordinal numbers such as "first" and "second" used in embodiments of this application are used to distinguish between a plurality of obj ects, and are not intended to limit an order, a time sequence, priorities, or importance of the plurality of objects. For example, first information and second information are merely used to distinguish between different information, but do not indicate that the two types of information are different in content, priorities, sending sequences, importance, or the like.

The following first describes technical terms used in embodiments of this application.

1. A cell, also referred to as a cellular cell, is a part or all of an area covered by a signal of a base station in a cellular mobile communication system. In this area, an electronic device may communicate with the base station through a wireless channel. It should be noted that, in embodiments of this application, the cell is not a physical area, but an area covered by the signal of the base station. For example, a same physical area may be covered by cells of different base stations, where standards and frequencies of the cells in the physical area may be the same or may be different.

The electronic device is an electronic device that has data processing, receiving, and sending capabilities, or a component (for example, a chip or an integrated circuit) in the electronic device. The electronic device may include a terminal device or a network side device.

In embodiments of this application, a physical area may be first determined, and then a cell set in the physical area is determined. Then, a base station energy saving method provided in embodiments of this application is used to implement user equipment handover within the cell set, to implement base station energy saving in the physical area. It should be noted that the physical area may also be referred to as a target area or an energy saving area.

2. Energy efficiency of a cell is a ratio of traffic of the cell to energy consumption of the cell.

In embodiments of this application, the energy efficiency of the cell may be a ratio of traffic of the cell in a target time period to energy efficiency of the cell in the target time period. The target time period is not limited.

The following describes a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

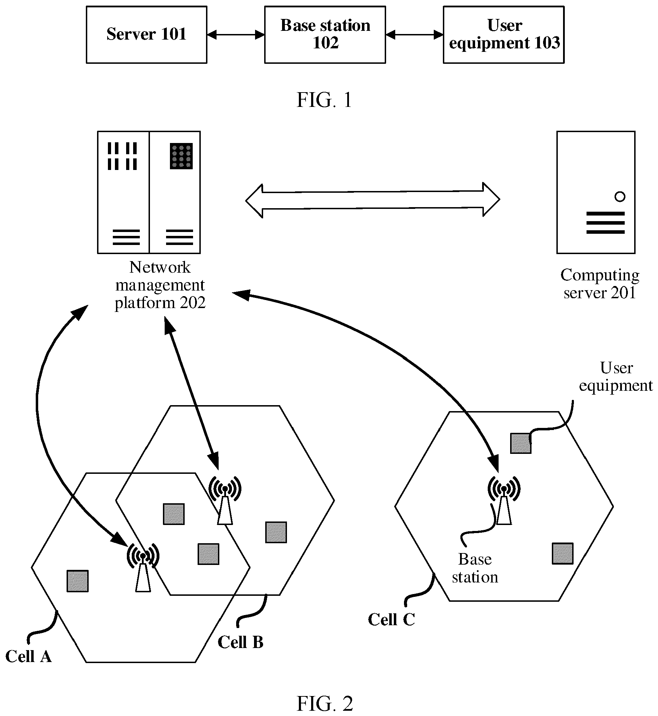

FIG. 1 is a schematic diagram of a possible communication system according to an embodiment of this application. As shown in FIG. 1, the communication system includes a server 101, a base station 102, and user equipment 103. There may be one or more servers 101. There may be one or more base stations 102. The base station 102 has at least two cells, and frequency bands of the at least two cells in a plurality of cells are different and coverage areas of the at least two cells partially overlap. For example, the base station 102 may include a multi-standard base station or a multi-band base station. There may be one or more user equipments 103.

In some embodiments, the user equipment 103 may access a cell of the base station 102 to implement communication. The base station 102 may maintain a communication connection to the server 101. The server 101 may send an instruction such as a cell shutdown instruction or a cell threshold adjustment instruction to the base station 102. The base station 102 may report cell information of the base station 102 to the server 101. For example, the base stations 102 are a plurality of base stations in a target area, and the base station 102 may upload a quantity and energy efficiency of cells in the target area to the server 101. The server 101 may determine, based on the energy efficiency of the cells, a low-energy-efficiency cell and a high-energy-efficiency cell paired with the low-energy-efficiency cell, and then send indication information to the base station 102. The base station 102 may shut down some low-energy-efficiency cells or adjust thresholds of some cells based on the indication information, to hand over user equipment in the low-energy-efficiency cell to the paired cell of the low-energy-efficiency cell.

The user equipment may request to associate with the base station. After the association succeeds, the base station may communicate with the user equipment. A link for communication between the base station and the user equipment may include various types of connection media, including a wired link (for example, an optical fiber), a wireless link, a combination of a wired link and a wireless link, and the like. For example, the link may use a short-range connection technology including 802.11b/g, Bluetooth (Bluetooth), Zigbee (Zigbee), a radio frequency identification (radio frequency identification, RFID) technology, an ultra wideband (ultra wideband, UWB) technology, and a wireless short-range communication system (for example, a vehicle-mounted wireless short-range communication system). For another example, the link may alternatively use a long-range connection technology including radio access type technologies such as a long term evolution (Long Term Evolution, long term evolution) based communication technology, a fifth generation mobile communication technology (5th generation mobile network or 5th generation wireless system, 5th-Generation, 5G or a 5G technology for short), a global system for mobile communications (global system for mobile communications, GSM), a general packet radio service (general packet radio service, GPRS), and a universal mobile telecommunications system (universal mobile telecommunications system, UMTS).

The base station 102 includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB or a transmission point (TRP or TP) in a 5G system, for example, an NR system, one antenna panel or a group of antenna panels (including a plurality of antenna panels) of a base station in a 5G system, or a network node that forms a gNB or a transmission point, for example, a baseband unit (BBU) or a distributed unit (distributed unit, DU).

The user equipment 103 may be referred to as an access terminal, a subscriber unit, a subscriber station, a mobile station, a remote station, a remote terminal, a mobile device, a user terminal, a terminal, a wireless communication device, a user agent, or a user apparatus. The user equipment 103 may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

FIG. 2 is a schematic diagram of another possible communication system according to an embodiment of this application. The communication system includes a computing server 201, a network management platform 202, a base station, and user equipment.

FIG. 2 shows an example of three base stations and several user equipments. As shown in FIG. 2, there are three base stations in a target area, the three base stations each have one cell, namely, a cell A, a cell B, or a cell C, and coverage areas of the cell A and the cell B partially overlap.

The computing server 201 may be an online tool platform, for example, a power star (Power star) cloud platform. The network management platform 202 may be an operation and maintenance center (Operation and Maintenance Center, OMC), for example, a U2000 platform.

In some embodiments, the computing server 201 may first initiate a measurement data input request to the OMC. The OMC controls the base station to start to collect measurement data, where the measurement data may include cell traffic, cell energy efficiency, and the like. The base station starts to perform measurement control (execute a measurement instruction) on the measurement data, and reports the measurement data to the OMC in real time. After collecting the measurement data, the OMC may import the measurement data into the computing server 201 to implement automatic reporting of the measurement data. The computing server 201 may generate an optimization solution based on the measurement data, where the optimization solution includes at least a low-energy-efficiency cell and a paired cell of the low-energy-efficiency cell. For example, the computing server 201 may identify, based on energy efficiency of different cells in a same area, user equipment that needs to be migrated and a target cell to which the user equipment is to be migrated, generate a corresponding handover parameter, and determine, based on the user equipment, a corresponding cell to which the user equipment is to be handed over from the low-energy-efficiency cell and a quantity of user equipments to be migrated to remaining cells. The optimization solution may include the user equipment that needs to be migrated, the target cell to which the user equipment is to be migrated, and the handover parameter. After determining a solution based on an energy saving parameter and the handover parameter, the computing server 201 may send a configuration command to the OMC, and the OMC converts the optimization solution into a man-machine language (MML) instruction to trigger an energy saving function and a handover feature that correspond to the base station, to implement automatic delivery of the optimization solution.

It may be understood that network architectures in FIG. 1 and FIG. 2 are merely example implementations in embodiments of this application. Communication network architectures in embodiments of this application include but are not limited to the foregoing network architectures.

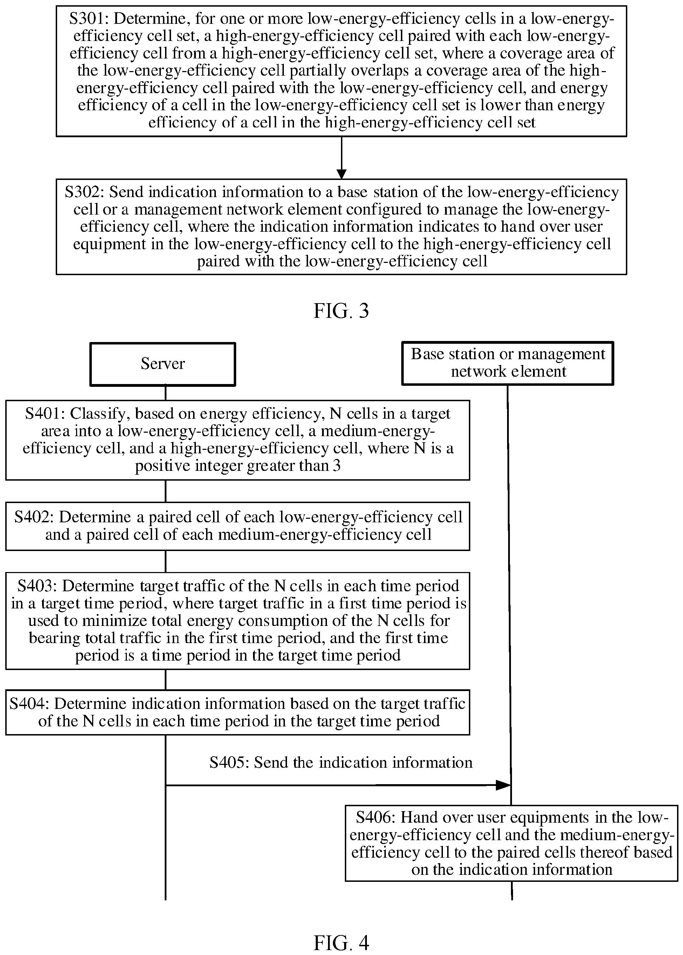

FIG. 3 is a schematic flowchart of a base station energy saving method according to an embodiment of this application. The method may be implemented based on the architecture shown in FIG. 1 or FIG. 2. The method may include some or all of the following steps.

Step S301: Determine, for one or more low-energy-efficiency cells in a low-energy-efficiency cell set, a high-energy-efficiency cell paired with each low-energy-efficiency cell from a high-energy-efficiency cell set, where a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set.

Energy efficiency of a cell is a ratio of traffic of the cell to energy consumption of the cell. It may be understood that, for cells that bear same traffic in unit time, lower energy consumption in the unit time indicates higher energy efficiency of the cell.

In some embodiments, N cells may be first classified based on energy efficiency to obtain a low-energy-efficiency cell set and a high-energy-efficiency cell set, and then a paired cell of each low-energy-efficiency cell in the low-energy-efficiency cell set is determined, where energy efficiency of the cell in the low-energy-efficiency cell set is lower than energy efficiency of the cell in the high-energy-efficiency cell set, and N is a positive integer. For example, the N cells may be sorted in descending order of energy efficiency, and cells ranking in the top K1% are determined as high-energy-efficiency cells, and other cells are low-energy-efficiency cells, where K1 is a positive number. It should be noted that a low-energy-efficiency cell may have no paired cell, or may have one or more paired cells.

In some other embodiments, the high-energy-efficiency cell set may be further classified. For example, the high-energy-efficiency cells are classified into a mid-level energy-efficiency cell and a high-level energy-efficiency cell, and then traffic of the mid-level energy-efficiency cell is migrated to the high-level energy-efficiency cell. For details, refer to an embodiment shown in FIG. 4.

For example, the following describes two methods for determining the paired cell of the low-energy-efficiency cell.

In an implementation, assuming that the high-energy-efficiency cell set includes at least two cells, for each low-energy-efficiency cell, a measurement report (Measurement Report, MR) in which the low-energy-efficiency cell is used as a primary serving cell may be first obtained. Then a quantity of occurrences of each cell in the high-energy-efficiency cell set in the MR is determined. A high-energy-efficiency cell with a largest quantity of occurrences is used as a high-energy-efficiency cell paired with the low-energy-efficiency cell. The MR is a measurement report reported by UE.

In another implementation, for each low-energy-efficiency cell, an MR in which the low-energy-efficiency cell is used as a primary serving cell may be first obtained, where the MR includes a neighboring cell of the low-energy-efficiency cell. Then a high-energy-efficiency cell is determined from the neighboring cell. Further, an MR overlap ratio K2 between the low-energy-efficiency cell and the high-energy-efficiency cell is calculated, and a high-energy-efficiency cell whose K2 is greater than a preset ratio is used as the paired cell of the low-energy-efficiency cell. One MR may include an identifier (only one) of a primary serving cell of UE and an identifier of a neighboring cell of the UE. It should be noted that, if a radio signal coverage area of one cell overlaps that of another cell, it is considered that the two cells are neighboring cells. For a specified cell, when another cell has a neighboring relationship with the specified cell, the another cell is referred to as a neighboring cell of the specified cell.

Optionally, a reference signal received power RSRP level value of the high-energy-efficiency cell paired with the low-energy-efficiency cell may be limited to being greater than a preset value. The preset value is used to ensure communication quality of a user after handover to the paired cell.

Step S302: Send indication information to a base station of the low-energy-efficiency cell or a management network element configured to manage the low-energy-efficiency cell, where the indication information indicates to hand over user equipment in the low-energy-efficiency cell to the high-energy-efficiency cell paired with the low-energy-efficiency cell.

In some embodiments, after the paired cell of the low-energy-efficiency cell is determined, the indication information may be sent to the base station of the low-energy-efficiency cell or the management network element configured to manage the low-energy-efficiency cell. After receiving the indication information, the base station of the low-energy-efficiency cell or the management network element configured to manage the low-energy-efficiency cell hands over the user equipment in the low-energy-efficiency cell to the high-energy-efficiency cell paired with the low-energy-efficiency cell.

It should be noted that, when the indication information is sent to the base station of the low-energy-efficiency cell or the management network element configured to manage the low-energy-efficiency cell, the indication information may also be sent to a base station of the high-energy-efficiency cell or a management network element configured to manage the high-energy-efficiency cell at the same time. The base station of the low-energy-efficiency cell and the base station of the high-energy-efficiency cell may be a same base station or different base stations, the management network element configured to manage the low-energy-efficiency cell and the management network element configured to manage the high-energy-efficiency cell may be a same network element or different network elements, and the indication information sent to the base station of the low-energy-efficiency cell or the management network element configured to manage the low-energy-efficiency cell and the indication information sent to the base station of the high-energy-efficiency cell or the management network element configured to manage the high-energy-efficiency cell may be same indication information or different indication information. FIG. 2 is used as an example. Three cells in FIG. 2 correspond to three base stations. The three base stations are managed by a same network element, that is, the network management platform 202. It is assumed that the cell A is a low-energy-efficiency cell, the cell B is a high-energy-efficiency cell, and the cell B is a paired cell of the cell A. In this case, after performing step S301, the computing server 201 may send the indication information to the network management platform 202, where the indication information is used for handing over user equipment in the cell A to the cell B.

In some embodiments, the user equipment in the low-energy-efficiency cell may be handed over to the high-energy-efficiency cell paired with the low-energy-efficiency cell by shutting down the low-energy-efficiency cell and/or adjusting a threshold of the low-energy-efficiency cell. In this case, whether the paired low-energy-efficiency cell is a shutdown cell or a to-be-adjusted cell may be first determined. If the low-energy-efficiency cell is determined to be the shutdown cell, the indication information specifically indicates to shut down the shutdown cell, and the indication information may further include shutdown time of each shutdown cell. If the low-energy-efficiency cell is determined to be the to-be-adjusted cell, the indication information specifically indicates to adjust a measurement start threshold and a measurement stop threshold of the to-be-adjusted cell, and the indication information may further include thresholds, namely, a target measurement start threshold and a target measurement stop threshold.

In an implementation, assuming that the low-energy-efficiency cell set and the high-energy-efficiency cell set include N cells in total, target traffic of the N cells in each time period may be first determined based on original traffic of the N cells in each historical time period. The target traffic of the N cells in each time period can minimize total energy consumption of the N cells for bearing historical total traffic. Further, the shutdown cell and/or the to-be-adjusted cell are/is determined from the N cells based on the target traffic of the N cells in each time period. A shutdown time period corresponding to the shutdown cell and/or the target measurement start threshold and the target measurement stop threshold corresponding to the to-be-adjusted cell may be further determined. It should be noted that the historical time period is a time period in history, the original traffic of the N cells in the historical time period is historical data, and the time period is a time period corresponding to the historical time period. For example, the historical time period is from 00:00 to 01:00 yesterday, the original traffic in the historical time period is traffic from 00:00 to 01:00 yesterday, and the time period corresponding to the historical time period is from 00:00 to 01:00 yesterday. In practice, traffic in a same time period of different days is generally similar. Therefore, optimal traffic in the time period may be predicted by using historical traffic in the same time period, to obtain target traffic in the time period.

For example, the following provides an example implementation of determining the shutdown cell. Specifically, assuming that the low-energy-efficiency cell set and the high-energy-efficiency cell set include the N cells in total, target traffic of the low-energy-efficiency cell in each of a plurality of time periods in a first target time period may be determined. The plurality of time periods include a first time period, target traffic of the low-energy-efficiency cell in the first time period is traffic of the low-energy-efficiency cell when total energy consumption of the N cells for bearing first total traffic is the lowest, and the first total traffic is a sum of original traffic of the N cells in a historical first time period. Further, a cell that is in the low-energy-efficiency cell set and whose sum of target traffic in the plurality of time periods is less than a first threshold is determined as the shutdown cell. In this case, the indication information may indicate the shutdown cell.

The indication information may further include the shutdown time of the shutdown cell. The shutdown time may be determined based on the target traffic. For example, the shutdown time may be consecutive time periods in which the target traffic of the shutdown cell is less than a second threshold.

For example, the following provides two example implementations of determining the to-be-adjusted cell.

In an implementation, assuming that the low-energy-efficiency cell set and the high-energy-efficiency cell set include N cells in total, target traffic of the low-energy-efficiency cell in each of a plurality of time periods in a second target time period may be determined. The plurality of time periods include a second time period, target traffic of the low-energy-efficiency cell in the second time period is traffic of the low-energy-efficiency cell when total energy consumption of the N cells for bearing second total traffic is the lowest, and the second total traffic is a sum of original traffic of the N cells in a historical second time period. Further, a cell that is in the low-energy-efficiency cell set and whose sum of target traffic in the plurality of time periods is less than a second threshold is determined as the to-be-adjusted cell. In this case, the indication information may indicate the to-be-adjusted cell. It should be noted that the foregoing first target time period and the foregoing second target time period may be a same time period, and the foregoing first time period and the foregoing second time period may be a same time period.

In another implementation, assuming that the shutdown cell is determined from the low-energy-efficiency cell, cells in the low-energy-efficiency cell set except the shutdown cell and each cell in the high-energy-efficiency cell set may be determined as to-be-adjusted cells.

The indication information further includes the target measurement start threshold and the target measurement stop threshold of the to-be-adjusted cell. The target measurement start threshold and the target measurement stop threshold may be determined based on the target traffic of the to-be-adjusted cell. For a specific determining method, refer to related content in the embodiment shown in FIG. 4.

The foregoing method embodiment shown in FIG. 3 includes many possible implementation solutions. The following illustrates some of the implementation solutions with reference to FIG. 4. It should be noted that, for related concepts, operations, or logical relationships that are not explained in FIG. 4, refer to corresponding descriptions in the embodiment shown in FIG. 3.

FIG. 4 is a schematic flowchart of another base station energy saving method according to an embodiment of this application. The method may be implemented based on the architecture shown in FIG. 1 or FIG. 2. Step S401 to step S404 may be performed by the server 101 shown in FIG. 1 or the computing server 201 shown in FIG. 2. Step S405 may be performed by the base station 102 shown in FIG. 1 or the network management platform 202 shown in FIG. 2. The method may include some or all of the following steps.

Step S401: A server classifies, based on energy efficiency, N cells in a target area into a low-energy-efficiency cell, a medium-energy-efficiency cell, and a high-energy-efficiency cell, where N is a positive integer greater than 3.

The target area may be a preset area, for example, a city or a district. It should be noted that this embodiment of this application is described by using an example in which the N cells are classified into cells of three levels (that is, the low-energy-efficiency cell, the medium-energy-efficiency cell, and the high-energy-efficiency cell). In another embodiment, the N cells in the target area may alternatively be classified into energy-efficiency cells of more levels based on energy efficiency. This is not limited herein.

In some embodiments, a quantity of cells in the target area may be first determined, then energy efficiency of each cell in the target area in a target time period is obtained, and next, the cells in the target area are classified into the low-energy-efficiency cell, the medium-energy-efficiency cell, and the high-energy-efficiency cell based on energy efficiency of each cell in the target time period. The target time period is a historical time period, for example, from 00:00 to 24:00 yesterday or from 01:00 to 06:00 on the day before yesterday.

For example, if the target area is a city A, and the target time period is from 00:00 to 24:00 of the previous day, a quantity N of cells in the city A may be first obtained. Then historical traffic and historical energy consumption of each of the N cells from 00:00 to 24:00 of the previous day are obtained. Next, the historical traffic of each cell from 00:00 to 24:00 of the previous day is divided by the historical energy consumption to obtain energy efficiency of each cell. Finally, based on the energy efficiency of each cell, the N cells are divided into a low-energy-efficiency cell, a medium-energy-efficiency cell, and a high-energy-efficiency cell.

In an implementation, the quantity of cells in the target area may be obtained by using engineering parameter data, and the traffic of each cell in the target area in the target time period may be determined by using key performance indicator (Key performance indicator, KPI) data and energy consumption data. Specifically, the engineering parameter data, the KPI data, and the energy consumption data of the target area in the target time period may be first obtained. The engineering parameter data includes the quantity of cells in the target area (where the quantity of cells is M), and the KPI data is historical traffic data of the N cells. Further, the quantity N of cells in the target area and the energy efficiency of the N cells are determined based on the engineering parameter data, the KPI data, and the energy consumption data of the target area. The energy efficiency of each of the N cells is a ratio of traffic of the cell in the target time period to energy consumption of the cell in the target time period. Further, the N cells are classified into the low-energy-efficiency cell, the medium-energy-efficiency cell, and the high-energy-efficiency cell based on the energy efficiency of the N cells.

For example, the following describes a method for classifying the N cells. The method includes: sorting the N cells in descending order of energy efficiency, determining cells ranking in the bottom P% (where P is recommended to be 30) as low-energy-efficiency cells, determining cells ranking in a range of P% to (100-Q)% as medium-energy-efficiency cells, and determining cells ranking in the top Q% (where Q is recommended to be 20) as high-energy-efficiency cells.

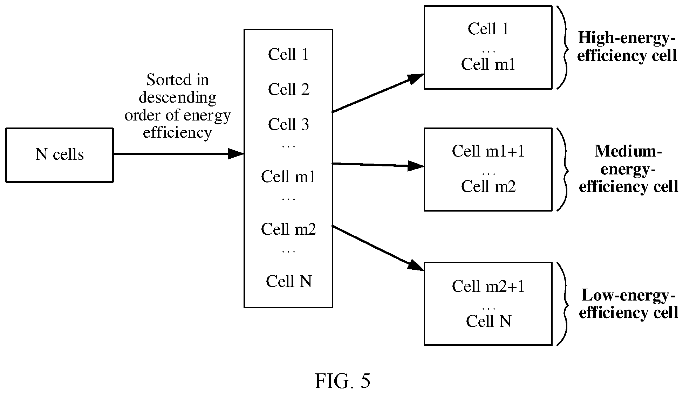

FIG. 5 is a schematic diagram of classification of N cells according to an embodiment of this application. As shown in FIG. 5, the N cells are sorted in descending order of energy efficiency. A cell 1 is a cell with highest energy efficiency, and a cell 2 is a cell with the second highest energy efficiency. By analogy, a cell N is a cell with lowest energy efficiency. $1 < m1 < m2 < N$, and n and m2 are both positive integers. Assuming that the cell 1 to a cell m1 rank in the top Q%, and a cell m 1 + 1 to a cell m2 rank in the bottom P%, the cell 1 to the cell m1 may be determined as high-energy-efficiency cells, the cell m 1 + 1 to the cell m2 may be determined as medium-energy-efficiency cells, and a cell n+1 to a cell m2 may be determined as low-energy-efficiency cells.

Step S402: The server determines a paired cell of each low-energy-efficiency cell and a paired cell of each medium-energy-efficiency cell.

In some embodiments, for each low-energy-efficiency cell, the paired cell of the low-energy-efficiency cell may be determined from the medium-energy-efficiency cell and the high-energy-efficiency cell, and for each medium-energy-efficiency cell, the paired cell of the medium-energy-efficiency cell may be determined from the high-energy-efficiency cell. It should be noted that the low-energy-efficiency cell may have one paired cell or a plurality of paired cells, and the medium-energy-efficiency cell may have one paired cell or a plurality of paired cells.

For example, the following describes several methods for determining a paired cell based on an MR.

In some embodiments, for each low-energy-efficiency cell, a measurement report MR in which the low-energy-efficiency cell is used as a primary serving cell may be first obtained, to obtain an MR set corresponding to the low-energy-efficiency cell. Then neighboring cells in the MR corresponding to each low-energy-efficiency cell are queried for the medium-energy-efficiency cell and the high-energy-efficiency cell, to obtain a to-be-paired cell of each low-energy-efficiency cell. Further, for each low-energy-efficiency cell, a quantity of occurrences of each to-be-paired cell of the low-energy-efficiency cell in the MR set corresponding to the low-energy-efficiency cell is determined, and a to-be-paired cell whose quantity of occurrences meets a preset condition is used as a paired cell of the low-energy-efficiency cell. For example, that a quantity of occurrences meets a preset condition may be that the quantity of occurrences exceeds a preset quantity of occurrences, or the quantity of occurrences of the to-be-paired cell is the largest among all to-be-paired cells. A first cell is used as an example. The first cell is a low-energy-efficiency cell. It is assumed that there are a total of five MRs in which the low-energy-efficiency cell is used as a primary serving cell. It is found from the five MRs that neighboring cells include one medium-energy-efficiency cell and two high-energy-efficiency cells, where the two high-energy-efficiency cells are a second cell and a third cell, the medium-energy-efficiency cell occurs in three MRs, the second cell occurs in four MRs, and the third cell occurs in five MRs. If the preset condition is that the quantity of occurrences is the largest, the third cell may be used as a paired cell of the first cell.

For each medium-energy-efficiency cell, a measurement report MR in which the medium-energy-efficiency cell is used as a primary serving cell may be first obtained, to obtain the MR corresponding to the medium-energy-efficiency cell. Then neighboring cells in the MR corresponding to each medium-energy-efficiency cell are queried for the high-energy-efficiency cell, to obtain a to-be-paired cell of each medium-energy-efficiency cell. Further, for each medium-energy-efficiency cell, a quantity of occurrences of each to-be-paired cell of the medium-energy-efficiency cell in the MR is determined, and a to-be-paired cell whose quantity of occurrences meets a preset condition is used as a paired cell of the medium-energy-efficiency cell.

In some other embodiments, the MR may further include an RSRP level value corresponding to a primary serving cell and an RSRP level value corresponding to each neighboring cell, and therefore, a level value of a paired cell of a low-energy-efficiency cell and/or a level value of a paired cell of a medium-energy-efficiency cell may be limited to being greater than a preset level value. The preset level value may be a preset value (which may also be referred to as a weak coverage threshold). For example, the preset level value is considered that if user equipment accesses the cell, call quality is poor because an RSRP value is excessively low.

A cell A and a cell B are used as an example. The cell A is a low-energy-efficiency cell, and the cell B is a medium-energy-efficiency cell.

First, an MR set in a target area may be obtained. The MR set is queried for an MR in which the cell A is used as a primary serving cell, to obtain an MR set corresponding to the cell A. Then neighboring cells in the MR set are queried for a medium-energy-efficiency cell and a high-energy-efficiency cell whose level values meet a preset value, to obtain a to-be-paired cell. Finally, a quantity of occurrences of the to-be-paired cell in the MR corresponding to the cell A is counted, and a cell whose quantity of occurrences meets a preset condition is used as a paired cell of the cell A.

A low-energy-efficiency cell, namely, a cell i, is used as an example. If a quantity of MRs in which the low-energy-efficiency cell, namely, the cell i, is a primary serving cell is G1, neighboring cells in the G1 MRs may be queried for a medium-energy-efficiency cell and a high-energy-efficiency cell, to obtain a to-be-paired cell. In this way, a quantity $c_{ij}$ of times that an RSRP level value of each to-be-paired medium-energy-efficiency cell in the G1 MRs is greater than a weak coverage threshold is counted, and a quantity $c_{ik}$ of times that an RSRP level value of each to-be-paired high-energy-efficiency cell in the G1 MRs is greater than the weak coverage threshold is counted. $c_{ij}$ and $c_{ik}$ are sorted in

descending order. The first K1 cells may be selected as neighboring cells with which the cell i is paired for migration.

It should be noted that MR data may further include SSB beam IDs (beam IDs of cell-level broadcast beams) of the primary serving cell and neighboring cells, corresponding RSRP (specific to 5G), and the like. This is not limited herein.

Step S403: The server determines target traffic of the N cells in each time period in a target time period, where target traffic in a first time period is used to minimize total energy consumption of the N cells for bearing total traffic in the first time period, and the first time period is a time period in the target time period.

The target time period may include a plurality of time periods. For example, if the target time period is from 00:00 to 24:00 on January 9, 2022, it may be considered that the target time period includes 24 time periods, and each time period is one hour.

In some embodiments, for each time period, the target traffic of the N cells in each time period may be determined based on traffic and energy consumption of the N cells in each time period, so that the total energy consumption of the N cells for bearing the corresponding target traffic in each time period is the lowest.

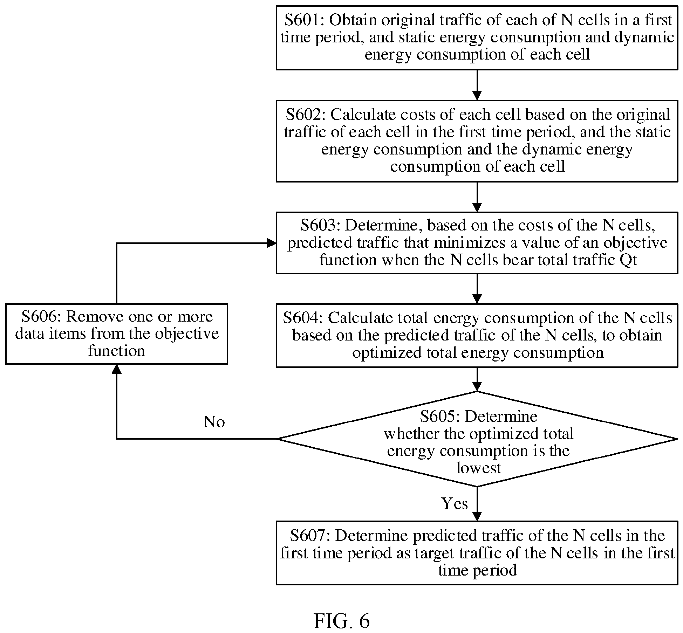

The following uses a first time period t as an example to describe a method for determining the target traffic of the N cells. Refer to FIG. 6. The method may include the following steps.

S601: Obtain original traffic of each of the N cells in the first time period, and static energy consumption and dynamic energy consumption of each cell.

In some embodiments, the original traffic of each of the N cells in the first time period t may be obtained from KPI data. The original traffic of the N cells in the $1^{st}$ time period may be represented by $S_1$. $S_1$ is a list including the original traffic of each cell in the first time period t, as shown in the following formula:

$$S_1 = \left[thp_{1,t}, thp_{2,t}, \ldots thp_{i,t}, \ldots, thp_{n,t}\right]$$

$n$ is a total quantity of cells, $thp_{i,t}$ is original traffic of an $i^{th}$ cell in t, and the $i^{th}$ cell is one of the N cells.

The static energy consumption and the dynamic energy consumption may be obtained by performing linear fitting on energy consumption and traffic data dots of the cells. A fitted vertical intercept is the static energy consumption, that is, energy consumption when cell load is 0 (in the case of no load). A fitted slope is the dynamic energy consumption, that is, extra energy consumption required by the cells for processing traffic of each bit. It should be noted that the cell load refers to cell traffic, and no load means that the cell traffic is 0 in this case.

S602: Calculate costs of each cell based on the original traffic of each cell in the first time period, and the static energy consumption and the dynamic energy consumption of each cell.

In some embodiments, a minimum cost flowchart of the N cells may be constructed based on a pairing relationship determined in step S402, and then the costs of each cell are calculated based on the minimum cost flowchart.

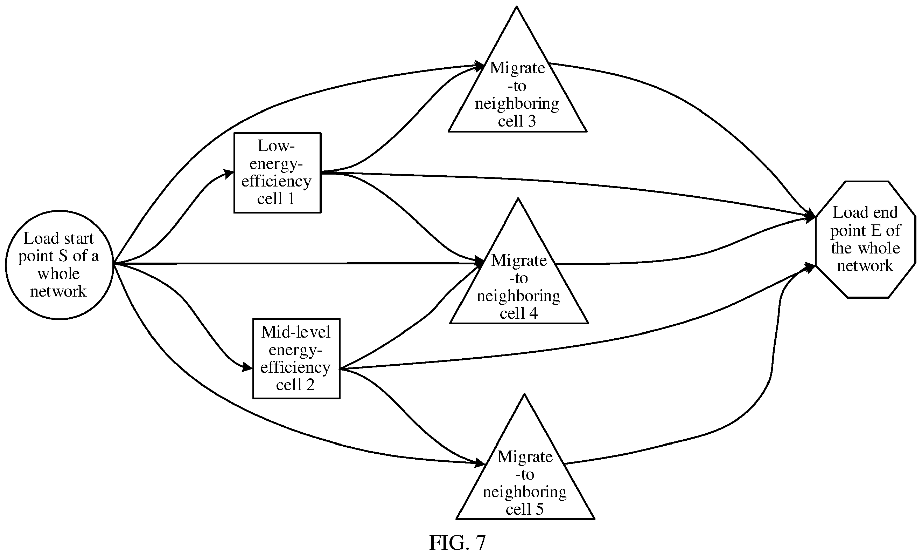

FIG. 7 is a schematic diagram of a minimum cost flowchart according to an embodiment of this application. As shown in FIG. 7, points in the minimum cost flowchart include cell nodes in a target area and two virtual nodes. The two virtual nodes are a load start point S of a whole network and a load end point E of the whole network, and the cell nodes in the target area are five example cells shown in FIG. 7. The five cells are a low-energy-efficiency cell 1, a mid-level energy-efficiency cell 2, a migrate-to neighboring cell 3, a migrate-to neighboring cell 4, and a migrate-to neighboring cell 5. An edge is determined based on the pairing relationship determined in step S402, and an arrow of the edge indicates a traffic migration direction. Paired cells of the low-energy-efficiency cell 1 are the migrate-to neighboring cell 3 and the migrate-to neighboring cell 4, and paired cells of the mid-level energy-efficiency cell 2 are the migrate-to neighboring cell 4 and the migrate-to neighboring cell 5. It should be noted that, the costs are only incurred at the edge of the cell set and the load end point E of the whole network; an edge between a migrate-to neighboring cell set and the load end point E of the whole network has a weight, that is, $u_{i,E} = r * thp_{i,t}$, where r is a preset value. In this way, it is ensured that the migrate-to neighboring cells are not overloaded.

Further, the costs of each cell may be determined by using the following formula. The formula is as follows:

$$cost_{i,E} = q_i + p_i/thp_{i,t}$$

$cost_{i,E}$ is costs of the $i^{th}$ cell, $q_i$ is static energy consumption of the $i^{th}$ cell, and $p_i$ is dynamic energy consumption of the $i^{th}$ cell.

S603: Optimize, based on the costs of the N cells, predicted traffic of the N cells by minimizing an objective function, to obtain predicted traffic that minimizes a value of the objective function when the N cells bear total traffic Qt.

The total traffic Qt of the N cells in the first time period is a sum of original traffic of each cell in the first time period t.

In some embodiments, the objective function and constraint conditions may be first constructed based on the costs of the N cells and the original traffic of the N cells in the first time period, and then the predicted traffic that minimizes the value of the objective function when the N cells bear the total traffic Qt is determined. The objective function may be a sum of data items corresponding to the N cells, and the data items are determined by the costs of the cells and the predicted traffic. It should be noted that the objective function may alternatively be another function, for example, an objective function in step S606. This is not limited herein.

The objective function may be as follows:

$$\min \sum_i cost_{i,E} * f_{i,E}$$

The constraint conditions may be as follows:

$$f_{S,i} = thp_{i,t} \ (1)$$

$$f_{S,i} + \sum_{o,i} f_{o,i} = f_{i,E} + \sum_{i,k} f_{i,k} \ (2)$$

$$f_{i,E} \le u_{i,E} \ (3)$$

$f_{i,E}$ is predicted traffic of the $i^{th}$ cell. The constraint condition (1) means that traffic $f_{S,i}$ from the start point S to the edge of the $i^{th}$ cell is equal to original traffic $thp_{i,t}$ of the $i^{th}$ cell. The constraint condition (2) means that for any cell i, traffic from the start point S to the $i^{th}$ cell plus traffic migrated from other cells to the $i^{th}$ cell is equal to traffic from the cell to the end point E plus traffic from the $i^{th}$ cell to the other cells. $f_{i,E}$ in the constraint condition (3) is used to ensure that the migrate-to neighboring cells are not overloaded.

Further, the objective function is solved, and the predicted traffic of the N cells is optimized by minimizing the value of the objective function, to obtain predicted traffic of the N cells in the first time period. A method for minimizing the value of the objective function is not limited herein.

The following illustrates two methods for minimizing the value of the objective function.

Method 1: The following uses a shortest path algorithm (Bellman-Ford, SPFA) as an example.

The foregoing objective function is solved by using the SPFA algorithm. Load of the whole network is reallocated to obtain the predicted traffic $S_{now}$ of the N cells. $S_{now} = [f_{1,E}, f_{2,E}, \dots f_{i,E}, \dots, f_{n,E}]$, where $f_{i,E}$ is the predicted traffic of the $i^{th}$ cell.

To solve a minimum cost maximum flow, a greedy strategy may be used. To be specific, an augmenting path from a source point to a meeting point is found each time while it is ensured that the augmenting path incurs minimum transportation costs in terms of article costs in a traffic unit compared with all other augmenting paths. For a network with a definite capacity, a maximum flow of the network is limited and definite. Therefore, there needs to be a moment at which an augmenting path cannot be found from a current residual network. In this case, the algorithm ends, and total traffic is equal to the maximum flow. In addition, because unit costs for each time of augmenting are the lowest, total costs are also clearly the lowest in all solutions. In view of a shortest path problem, the SPFA algorithm for queue optimization can be used to solve a single source shortest path, to find a shortest path between two nodes. A similar idea is used to convert a distance between two points into costs between the two points, and then the SPFA algorithm is run. In addition, maximum traffic from a source point to each point is maintained to obtain an augmenting path with minimum costs from the source point to a meeting point. The path is used for augmenting, and then the process is repeated until no augmenting path can be found. In this case, total traffic and total costs are desired.

Method 2: A linear programming solver is used as an example.

The foregoing objective function is solved by using the linear programming solver. Load of the whole network is reallocated to obtain the predicted traffic $S_{now}$ of the N cells. $S_{now} = [f_{i,E}, f_{2,E}, \dots f_{i,E}, \dots, f_{n,E}]$, where $f_{i,E}$ is the predicted traffic of the $i^{th}$ cell. The method may include the following steps: (1) A constraint equation set for a linear programming problem is expressed as a canonical equation set, and a basic feasible solution is found as an initial basic feasible solution. (2) The initial basic feasible solution is used as a start point, and based on optimality and feasibility conditions, a non-basic variable is introduced to replace a basic variable to find another basic feasible solution with a better value of the objective function. (3) Iteration is performed according to step (2) until a corresponding checking number meets the optimality condition (in this case, the value of the objective function can no longer be improved), that is, the optimal solution of the problem is obtained.

S604: Calculate total energy consumption of the N cells based on the predicted traffic of the N cells, to obtain optimized total energy consumption.

In some embodiments, after the predicted traffic of the N cells is obtained, the total energy consumption of the N cells for bearing the predicted traffic may be calculated based on the following formula:

$$FEC_{i,t} = \begin{cases} p_i + q_i * f_{i,E}, if\ f_{i,E} > 0 \\ 0, else \end{cases}$$

$$f_{now} = \sum_i FEC_{i,t}$$

$FEC_{i,t}$ is energy consumption of the ith cell when the predicted traffic is $f_{i,E}$, and $f_{now}$ is the total energy consumption calculated based on the predicted traffic of the N cells.

S605: Determine whether the optimized total energy consumption is the lowest, and perform step S606 if the optimized total energy consumption is not the lowest, or perform step S607 if the optimized total energy consumption is the lowest.

In some embodiments, total energy consumption $f_{best}$ that is not optimized may be determined based on traffic $S_{best}$ before optimization. Then the optimized total energy consumption $f_{now}$ is compared with the total energy consumption $f_{best}$ that is not optimized to determine whether the total energy consumption is converged. If it is determined that the optimized total energy consumption is not the lowest during total energy consumption convergence, step S606 is performed. If it is determined that the optimized total energy consumption is the lowest during total energy consumption convergence, step S607 is performed.

For example, if a value of the objective function is minimized for the first time, original traffic $S_1$ of the N cells in the 1st time period may be used as cell traffic $S_{best}$ before optimization, and original total energy consumption of the N cells in the 1st time period is used as the total energy consumption $f_{best}$ that is not optimized. Then, total energy consumption $f_{now}$ obtained through the first time of optimization is compared with the original total energy consumption $f_{best}$ of the N cells. If the total energy consumption obtained through the first time of optimization is less than the original total energy consumption of the N cells, step S606 is performed. If the total energy consumption obtained through the first time of optimization is no less than the original total energy consumption of the N cells, step S607 is performed.

$S_{best}$ is shown in the following formula:

$$S_{best} = [thp_{1,t}, thp_{2,t}, \dots thp_{i,t}, \dots, thp_{n,t}]$$

The original total energy consumption of the N cells may be determined by using the following formula:

$$EC_{i,t} = \begin{cases} p_i + q_i * thp_{i,t}, if\ thp_{i,t} > 0 \\ 0, else \end{cases}$$

$$f_{best} = \sum_i EC_{i,t}$$

$EC_{i,t}$ is original energy consumption of the ith cell in t; in this case, the total energy consumption $f_{best}$ that is not optimized is a sum of original energy consumption of each of the N cells in t.

S606: Remove one or more data items from the objective function, and perform step S603 to step S605.

In some embodiments, a cell with $f_{i,E} > 0$ and $\frac{thp_{i,t} - f_{i,E}}{thp_{i,t}} * p_i$ greater than a preset value may be selected from low-energy-efficiency cells, a data item corresponding to the cell is deleted from the objective function, and then step S603 to step S605 are performed. $f_{i,E} > 0$ and $\frac{thp_{i,t} - f_{i,E}}{thp_{i,t}} * p_i$ correspondingly refer to a low-energy-efficiency cell with high static energy consumption (also referred to as basic load) and small $f_{i,E}$. It may be considered that an edge from the cell to the load end point E of the whole network is deleted from FIG. 6, and then step S603 to step S605 are performed for a changed network flowchart.

It should be noted that, when step S605 is performed, the total energy consumption $S_{now}$ before optimization is updated to $S_{best}$ obtained through previous optimization, and the total energy consumption $f_{best}$ that is not optimized may be updated to $f_{now}$ obtained through previous optimization.

S607: Determine the predicted traffic of the N cells in the first time period as target traffic of the N cells in the first time period.

Further, the target traffic of the N cells in each time period in the target time period may be determined based on the target traffic of the N cells in the first time period, to obtain the target traffic of the N cells in each time period in the target time period. It should be noted that the first time period may be the target time period.

Step S404: The server determines indication information based on the target traffic of the N cells in each time period in the target time period, where the indication information indicates to hand over user equipments in the low-energy-efficiency cell and the medium-energy-efficiency cell to the paired cells thereof.

In some embodiments, the indication information may be a handover parameter and/or an energy saving parameter. Specifically, the handover parameter or the energy saving parameter may be generated based on the target traffic of the N cells in each time period in the target time period. The handover parameter may include a to-be-adjusted cell, and may further include $X_i$ = $[thr_i^1, thr_i^2]$, where $thr_i^1$ is a target measurement start threshold of the to-be-adjusted cell, and $thr_i^2$ is a target measurement stop threshold of the to-be-adjusted cell. The energy saving parameter may include a shutdown cell, and may further include shutdown time and end time of the shutdown cell.

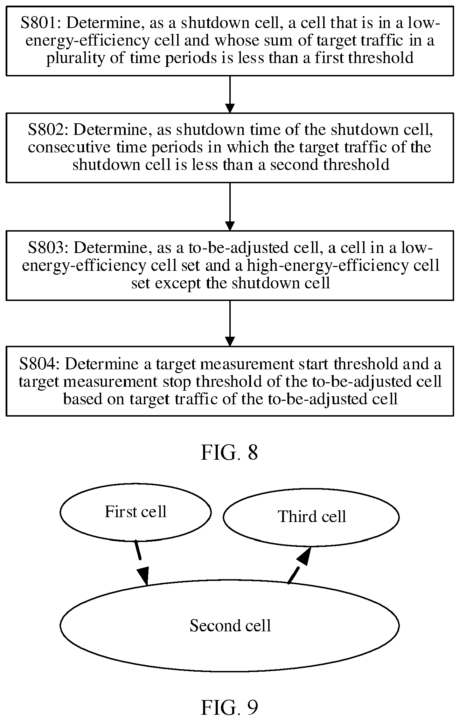

For example, the following describes a method for generating the indication information. Refer to FIG. 8. The method includes some or all of the following steps.

S801: Determine, as the shutdown cell, a cell that is in the low-energy-efficiency cell set and whose sum of target traffic in a plurality of time periods is less than a first threshold.

In an implementation, the target traffic of the low-energy-efficiency cell in each time period of the target time period may be summed, and the sum of target traffic is compared with the first threshold. If the sum of target traffic is less than the first threshold, the low-energy-efficiency cell is determined as the shutdown cell. The first threshold is a preset value.

For example, if the sum of target traffic of the low-energy-efficiency cell in the target time period is less than K3% of a sum of original traffic of the cell, the low-energy-efficiency cell may be set as the shutdown cell, where K3 is a preset value.

S802: Determine, as the shutdown time of the shutdown cell, consecutive time periods in which the target traffic of the shutdown cell is less than a second threshold.

The shutdown time may be represented by a time period, for example, from 00:00 to 06:00, or may be represented by energy saving start time and energy saving end time, for example, two values, namely, 00:00 and 06:00. The representation manner of the shutdown time is not limited herein.

In an implementation, the target traffic of the shutdown cell in each time period in the target time period may be compared with the second threshold, to determine a time period for shutdown in which the target traffic is less than the second threshold. Consecutive time periods for shutdown are selected as the shutdown time. The second threshold is a preset value. For example, if the target time period is six time periods from 00:00 to 06:00, each time period is one hour, target traffic of the shutdown cell in each of three time periods from 00:00 to 03:00 is lower than the second threshold, target traffic in a time period from 03:00 to 04:00 is greater than the second threshold, and the target traffic in each time period from 04:00 to 06:00 is lower than the second threshold, it may be determined that the shutdown time of the shutdown cell is from 00:00 to 03: 00. Further, 00:00 and 03:00 may be selected as the energy saving start time and the energy saving end time of the shutdown cell respectively.

S803: Determine, as a to-be-adjusted cell, a cell in a low-energy-efficiency cell set and a high-energy-efficiency cell set except the shutdown cell.

In an implementation, all cells in the low-energy-efficiency cell set and the high-energy-efficiency cell set except the shutdown cell may be determined as to-be-adjusted cells.

S804: Determine a target measurement start threshold and a target measurement stop threshold of the to-be-adjusted cell based on target traffic of the to-be-adjusted cell.

In an implementation, the target measurement start threshold and the target measurement stop threshold of each to-be-adjusted cell may be calculated based on the following formulas:

$$thr_i^1 = \max\left( min\left( thr_i^1 + \alpha_1 * \left( \sum_t (thp_{i,t} - f_{i,E,t}) \right), maxthr_i^1 \right), minthr_i^1 \right)$$

$$thr_i^2 = \max\left( min\left( thr_i^2 - \alpha_2 * \left( \sum_t thp_{i,t} - f_{i,E,t} \right), maxthr_i^2 \right), minthr_i^2 \right)$$

$\alpha_1$, $\alpha_2$, $maxthr_i^1$, $minthr_i^1$, $maxthr_i^2$, and $minthr_i^2$ are all preset values, $\alpha_1$ and $\alpha_2$ are updated steps, $maxthr_i^1$ and $minthr_i^1$ are a maximum value and a minimum value of a measurement start threshold of the $i^{th}$ cell respectively, and $maxthr_i^2$ and $minthr_i^2$ are a maximum value and a minimum value of a measurement stop threshold of the $i^{th}$ cell respectively. It should be noted that, the measurement start threshold and the measurement stop threshold may be adjusted, to migrate the user equipments in the low-energy-efficiency cell and the medium-energy-efficiency cell to the paired cells thereof.

In conclusion, through steps S801 to S804, the shutdown cell, the to-be-adjusted cell, the shutdown time and the end time of the shutdown cell, and the target measurement start threshold and the target measurement stop threshold $thr_i^2$ of the to-be-adjusted cell may be obtained.

Step S405: The server sends the indication information to a base station or a management network element located in the target area.

Using FIG. 1 as an example, the base station in the target area is the base station 102. After generating the indication information, the server 101 may send the indication information to the base station 102, so that the base station 102 implements user equipment handover. Using FIG. 2 as an example, the management network element in the target area is the network management platform 202. After generating the indication information, the computing server 201 sends the indication information to the network management platform 202, and the network management platform 202 controls the base station to implement user equipment handover.

Step S406: The base station or the management network element hands over the user equipments in the low-energy-efficiency cell and the medium-energy-efficiency cell to the paired cells thereof based on the indication information.

In an implementation, based on the indication information, the base station or the management network element migrates the user equipment in the low-energy-efficiency cell to the medium-energy-efficiency cell and the high-energy-efficiency cell that are paired with the low-energy-efficiency cell, and hands over the user equipment in the medium-energy-efficiency cell to the high-energy-efficiency cell paired with the medium-energy-efficiency cell.

FIG. 9 is a schematic diagram of user equipment handover according to an embodiment of this application. FIG. 9 shows three example cells: a first cell, a second cell, and a third cell. Assuming that indication information indicates that the first cell is a low-energy-efficiency cell, the second cell is a medium-energy-efficiency cell paired with the first cell, and the third cell is a high-energy-efficiency cell paired with the second cell, after receiving the indication information, a base station or a management network element may hand over user equipment in the first cell to the second cell, and hand over user equipment in the second cell to the third cell. For a specific user equipment handover method, refer to related content in step S404. Details are not described herein again.

In some embodiments, after obtaining the foregoing indication information, where the indication information includes an energy saving parameter and a handover parameter, the base station or the management network element may deliver the indication information to an OMC to adjust an energy saving parameter and a handover parameter of a cell in an actual communication network. The base station and the management network element may first shut down a shutdown cell based on the energy saving parameter, or may first adjust a threshold of a to-be-adjusted cell based on the handover parameter, or may simultaneously shut down the shutdown cell and adjust the threshold. This is not limited herein.

The foregoing describes in detail the methods in embodiments of this application. The following provides apparatuses in embodiments of this application.

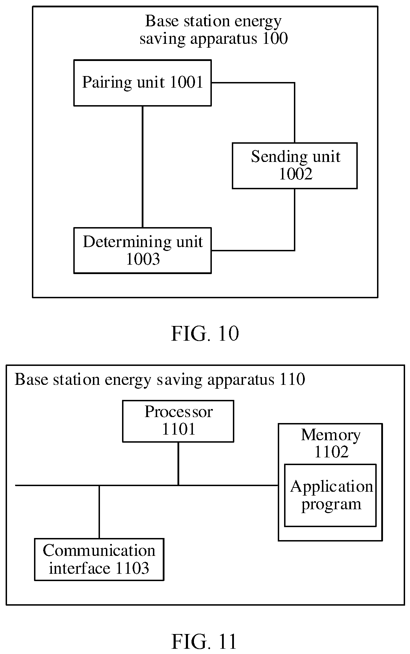

FIG. 10 is a schematic diagram of a structure of a base station energy saving apparatus 100 according to an embodiment of this application. The apparatus 100 may include a pairing unit 1001 and a sending unit 1002, and may further include a determining unit 1003. The base station energy saving apparatus 100 is configured to implement the foregoing base station energy saving method, for example, the base station energy saving method according to any embodiment shown in FIG. 3 or FIG. 4.

The base station energy saving apparatus 100 includes:

the pairing unit 1001, configured to determine, for one or more low-energy-efficiency cells in a low-energy-efficiency cell set, a high-energy-efficiency cell paired with each low-energy-efficiency cell from a high-energy-efficiency cell set, where a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set; and

the sending unit 1002, configured to send indication information to a base station of the low-energy-efficiency cell or a management network element configured to manage the low-energy-efficiency cell, where the indication information indicates to hand over user equipment in the low-energy-efficiency cell to the high-energy-efficiency cell paired with the low-energy-efficiency cell.

In a possible implementation, the one or more low-energy-efficiency cells include a shutdown cell, and the indication information specifically indicates to shut down the shutdown cell.

In a possible implementation, the low-energy-efficiency cell set and the high-energy-efficiency cell set include N cells in total, the apparatus further includes the determining unit 1003, and the determining unit 1003 is configured to: determine, as the shutdown cell, a cell that is in the low-energy-efficiency cell set and whose sum of target traffic in a plurality of time periods is less than a first threshold, where target traffic of the low-energy-efficiency cell in a first time period is traffic of the low-energy-efficiency cell when total energy consumption of the N cells for bearing first total traffic is the lowest, the first total traffic is a sum of original traffic of the N cells in the historical first time period, and the first time period is any one of the plurality of time periods.

In a possible implementation, the indication information further includes shutdown time of the shutdown cell, and the shutdown time is consecutive time periods in which target traffic of the shutdown cell is less than a second threshold.

In a possible implementation, the one or more low-energy-efficiency cells include a to-be-adjusted cell, and the indication information specifically indicates to adjust a measurement start threshold and a measurement stop threshold of the to-be-adjusted cell.

In a possible implementation, the low-energy-efficiency cell set and the high-energy-efficiency cell set include N cells in total, the apparatus further includes the determining unit 1003, and the determining unit 1003 is configured to: determine, as the to-be-adjusted cell, a cell that is in the low-energy-efficiency cell set and whose sum of the target traffic in the plurality of time periods is greater than a third threshold, where target traffic of the to-be-adjusted cell in a second time period is traffic of the to-be-adjusted cell when total energy consumption of the N cells for bearing second total traffic is the lowest, the second total traffic is a sum of original traffic of the N cells in the historical second time period, and the second time period is any one of the plurality of time periods.

In a possible implementation, the indication information further includes a target measurement start threshold and a target measurement stop threshold of the to-be-adjusted cell, and the target measurement start threshold and the target measurement stop threshold are based on the target traffic of the to-be-adjusted cell.

In a possible implementation, the high-energy-efficiency cell set includes at least two cells, and the pairing unit 1001 is configured to:

obtain a measurement report MR in which the low-energy-efficiency cell is used as a primary serving cell;

determine a quantity of occurrences of each cell in the high-energy-efficiency cell set in the MR; and

use a cell with a largest quantity of occurrences as the high-energy-efficiency cell paired with the low-energy-efficiency cell.

In a possible implementation, a reference signal received power RSRP level value of the high-energy-efficiency cell paired with the low-energy-efficiency cell is greater than a preset value.

It should be noted that, an implementation of each unit may also correspond to the corresponding descriptions of the embodiment shown in FIG. 3 or FIG. 4.

It may be understood that, in the apparatus embodiments of this application, division into a plurality of units or modules is merely logical division based on functions, and is not intended to limit a specific structure of the apparatus. In a specific implementation, some functional modules may be subdivided into more functional modules that are smaller, and some functional modules may also be combined into one functional module. However, regardless of whether these functional modules are subdivided or combined, a general process performed by the apparatus 100 in a pairing process is the same. Usually, each unit corresponds to respective program code (or program instructions). When the program code corresponding to the unit is run on a processor, the unit performs a corresponding process to implement a corresponding function.

FIG. 11 is a schematic diagram of a structure of another base station energy saving apparatus 110 according to an embodiment of this application. The apparatus 110 includes at least one processor 1101, at least one memory 1102, and at least one communication interface 1103. The processor 1101, the memory 1102, and the communication interface 1103 are connected to and communicate with each other through a communication bus.

The processor 1101 may be a general-purpose central processing unit (CPU), a microprocessor, an application-specific integrated circuit (application-specific integrated circuit, ASIC), or one or more integrated circuits for controlling program execution for the foregoing solutions.

The communication interface 1103 is configured to communicate with another device or a communication network, such as the Ethernet, a radio access network (RAN), or a wireless local area network (Wireless Local Area Network, WLAN).

The memory 1102 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the bus. The memory may alternatively be integrated with the processor.

The memory 1102 is configured to store application code for executing the foregoing solutions, and the processor 1101 controls the execution. The processor 1101 is configured to execute the application code stored in the memory 1102.

The code stored in the memory 1102 may perform any base station energy saving method provided above.

For example, for one or more low-energy-efficiency cells in a low-energy-efficiency cell set, a high-energy-efficiency cell paired with each low-energy-efficiency cell is determined from a high-energy-efficiency cell set, where a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set. Indication information is sent to a base station of the low-energy-efficiency cell or a management network element configured to manage the low-energy-efficiency cell, where the indication information indicates to hand over user equipment in the low-energy-efficiency cell to the high-energy-efficiency cell paired with the low-energy-efficiency cell.

An embodiment of this application further provides a computer storage medium. The computer storage medium may store a program, and when the program is executed, some or all of the steps of any base station energy saving apparatus recorded in the foregoing method embodiments are performed.

It should be noted that, for brief description, the foregoing method embodiments are represented as a combination of a series of actions. However, a person skilled in the art should appreciate that this application is not limited to the described order of the actions, because according to this application, some steps may be performed in other orders or simultaneously. It should be further appreciated by a person skilled in the art that embodiments described in this specification are all example embodiments, and the involved actions and modules are not necessarily required by this application.

In the foregoing embodiments, the description of each embodiment has a respective focus. For a part that is not described in detail in an embodiment, refer to related descriptions in other embodiments.

In the several embodiments provided in this application, it should be understood that the disclosed apparatus may be implemented in other manners. For example, the described apparatus embodiment is merely an example. For example, division into the units is merely logical function division and there may be other division manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or another form.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable memory. Based on such an understanding, the technical solutions of this application essentially, or the part contributing to the conventional technology, or all or some of the technical solutions may be implemented in the form of a software product. The computer software product is stored in a memory and includes several instructions for enabling a computer device (which may be a personal computer, a server, a network device, or the like) to perform all or some of the steps of the methods according to embodiments of this application. The foregoing storage medium includes any medium that can store program code, such as a USB flash drive, a read-only memory (ROM, Read-Only Memory), a random access memory (RAM, Random Access Memory), a removable hard disk, a magnetic disk, or an optical disc.

A person of ordinary skill in the art may understand that all or some of the steps of the methods in the foregoing embodiments may be implemented by a program instructing related hardware. The program may be stored in a computer-readable memory. The memory may include a flash memory, a read-only memory (English: Read-Only Memory, ROM for short), a random access memory (English: Random Access Memory, RAM for short), a magnetic disk, an optical disc, or the like.

Embodiments of this application are described in detail above. The principle and implementations of this application are described herein through specific examples. The description of the foregoing embodiments is merely provided to facilitate understanding of the methods and core ideas in this application. In addition, a person of ordinary skill in the art can make variations and modifications to this application in terms of the specific implementations and application scopes based on the ideas in this application. Therefore, the content of specification shall not be construed as a limit to this application.

## Claims

1. Abase station energy saving method, wherein the method comprises:

   determining, for one or more low-energy-efficiency cells in a low-energy-efficiency cell set, a high-energy-efficiency cell paired with each low-energy-efficiency cell from a high-energy-efficiency cell set, wherein a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set; and
   sending indication information to a base station of the low-energy-efficiency cell or a management network element configured to manage the low-energy-efficiency cell, wherein the indication information indicates to hand over user equipment in the low-energy-efficiency cell to the high-energy-efficiency cell paired with the low-energy-efficiency cell.

2. The method according to claim 1, wherein the one or more low-energy-efficiency cells comprise a shutdown cell, and the indication information specifically indicates to shut down the shutdown cell.

3. The method according to claim 2, wherein the low-energy-efficiency cell set and the high-energy-efficiency cell set comprise N cells in total, and the method further comprises:
   determining, as the shutdown cell, a cell that is in the low-energy-efficiency cell set and whose sum of target traffic in a plurality of time periods is less than a first threshold, wherein target traffic of the low-energy-efficiency cell in a first time period is traffic of the low-energy-efficiency cell when total energy consumption of the N cells for bearing first total traffic is the lowest, the first total traffic is a sum of original traffic of the N cells in the historical first time period, and the first time period is any one of the plurality of time periods.

4. The method according to claim 3, wherein the indication information further comprises shutdown time of the shutdown cell, and the shutdown time is consecutive time periods in which the target traffic of the shutdown cell is less than a second threshold.

5. The method according to any one of claims 1 to 4, wherein the one or more low-energy-efficiency cells comprise a to-be-adjusted cell, and the indication information specifically indicates to adjust a measurement start threshold and a measurement stop threshold of the to-be-adjusted cell.

6. The method according to claim 5, wherein the low-energy-efficiency cell set and the high-energy-efficiency cell set comprise the N cells in total, and the method further comprises:
   determining, as the to-be-adjusted cell, a cell that is in the low-energy-efficiency cell set and whose sum of target traffic in the plurality of time periods is greater than a third threshold, wherein target traffic of the to-be-adjusted cell in a second time period is traffic of the to-be-adjusted cell when total energy consumption of the N cells for bearing second total traffic is the lowest, the second total traffic is a sum of original traffic of the N cells in the historical second time period, and the second time period is any one of the plurality of time periods.

7. The method according to claim 6, wherein the indication information further comprises a target measurement start threshold and a target measurement stop threshold of the to-be-adjusted cell, and the target measurement start threshold and the target measurement stop threshold are determined based on the target traffic of the to-be-adjusted cell.

8. The method according to any one of claims 1 to 7, wherein the high-energy-efficiency cell set comprises at least two cells, and the determining, for one or more low-energy-efficiency cells in a low-energy-efficiency cell set, a high-energy-efficiency cell paired with each low-energy-efficiency cell from a high-energy-efficiency cell set comprises:

obtaining a measurement report MR in which the low-energy-efficiency cell is used as a primary serving cell;
determining a quantity of occurrences of each cell in the high-energy-efficiency cell in the MR; and
using a cell with a largest quantity of occurrences as the high-energy-efficiency cell paired with the low-energy-efficiency cell.

9. The method according to any one of claims 1 to 8, wherein a reference signal received power RSRP level value of the high-energy-efficiency cell paired with the low-energy-efficiency cell is greater than a preset value.

10. Abase station energy saving apparatus, comprising:

a pairing unit, configured to determine, for one or more low-energy-efficiency cells in a low-energy-efficiency cell set, a high-energy-efficiency cell paired with each low-energy-efficiency cell from a high-energy-efficiency cell set, wherein a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set; and
a sending unit, configured to send indication information to a base station of the low-energy-efficiency cell or a management network element configured to manage the low-energy-efficiency cell, wherein the indication information indicates to hand over user equipment in the low-energy-efficiency cell to the high-energy-efficiency cell paired with the low-energy-efficiency cell.

11. The apparatus according to claim 10, wherein the one or more low-energy-efficiency cells comprise a shutdown cell, and the indication information specifically indicates to shut down the shutdown cell.

12. The apparatus according to claim 11, wherein the low-energy-efficiency cell set and the high-energy-efficiency cell set comprise N cells in total, the apparatus further comprises a determining unit, and the determining unit is configured to:
determine, as the shutdown cell, a cell that is in the low-energy-efficiency cell and whose sum of target traffic in a plurality of time periods is less than a first threshold, wherein target traffic of the low-energy-efficiency cell in a first time period is traffic of the low-energy-efficiency cell when total energy consumption of the N cells for bearing first total traffic is the lowest, the first total traffic is a sum of original traffic of the N cells in the historical first time period, and the first time period is any one of the plurality of time periods.

13. The apparatus according to claim 12, wherein the indication information further comprises shutdown time of the shutdown cell, and the shutdown time is consecutive time periods in which the target traffic of the shutdown cell is less than a second threshold.

14. The apparatus according to any one of claims 10 to 13, wherein the one or more low-energy-efficiency cells comprise a to-be-adjusted cell, and the indication information specifically indicates to adjust a measurement start threshold and a measurement stop threshold of the to-be-adjusted cell.

15. The apparatus according to claim 14, wherein the low-energy-efficiency cell set and the high-energy-efficiency cell set comprise the N cells in total, the apparatus further comprises the determining unit, and the determining unit is configured to:
determine, as the to-be-adjusted cell, a cell that is in the low-energy-efficiency cell set and whose sum of target traffic in the plurality of time periods is greater than a third threshold, wherein target traffic of the to-be-adjusted cell in a second time period is traffic of the to-be-adjusted cell when total energy consumption of the N cells for bearing second total traffic is the lowest, the second total traffic is a sum of original traffic of the N cells in the historical second time period, and the second time period is any one of the plurality of time periods.

**16.** The apparatus according to claim 15, wherein the indication information further comprises a target measurement start threshold and a target measurement stop threshold of the to-be-adjusted cell, and the target measurement start threshold and the target measurement stop threshold are determined based on the target traffic of the to-be-adjusted cell.

**17.** The apparatus according to any one of claims 10 to 16, wherein the high-energy-efficiency cell set comprises at least two cells, and the pairing unit is configured to:

obtain a measurement report MR in which the low-energy-efficiency cell is used as a primary serving cell;
determine a quantity of occurrences of each cell in the high-energy-efficiency cell in the MR; and
use a cell with a largest quantity of occurrences as the high-energy-efficiency cell paired with the low-energy-efficiency cell.

**18.** The apparatus according to any one of claims 10 to 17, wherein a reference signal received power RSRP level value of the high-energy-efficiency cell paired with the low-energy-efficiency cell is greater than a preset value.

**19.** A chip system, wherein the chip system comprises at least one processor and a communication interface, the communication interface is configured to send and/or receive data, and the at least one processor is configured to invoke a computer program stored in at least one memory, to enable an apparatus in which the chip system is located to implement the method according to any one of claims 1 to 9.

**20.** A computer-readable storage medium, wherein the computer-readable storage medium stores a computer program; and when the computer program is run on one or more processors, the method according to any one of claims 1 to 9 is performed.

FIG. 1

FIG. 2

S301: Determine, for one or more low-energy-efficiency cells in a low-energy-efficiency cell set, a high-energy-efficiency cell paired with each low-energy-efficiency cell from a high-energy-efficiency cell set, where a coverage area of the low-energy-efficiency cell partially overlaps a coverage area of the high-energy-efficiency cell paired with the low-energy-efficiency cell, and energy efficiency of a cell in the low-energy-efficiency cell set is lower than energy efficiency of a cell in the high-energy-efficiency cell set

S302: Send indication information to a base station of the low-energy-efficiency cell or a management network element configured to manage the low-energy-efficiency cell, where the indication information indicates to hand over user equipment in the low-energy-efficiency cell to the high-energy-efficiency cell paired with the low-energy-efficiency cell

FIG. 3

Server

Base station or management network element

S401: Classify, based on energy efficiency, N cells in a target area into a low-energy-efficiency cell, a medium-energy-efficiency cell, and a high-energy-efficiency cell, where N is a positive integer greater than 3

S402: Determine a paired cell of each low-energy-efficiency cell and a paired cell of each medium-energy-efficiency cell

S403: Determine target traffic of the N cells in each time period in a target time period, where target traffic in a first time period is used to minimize total energy consumption of the N cells for bearing total traffic in the first time period, and the first time period is a time period in the target time period

S404: Determine indication information based on the target traffic of the N cells in each time period in the target time period

S405: Send the indication information

S406: Hand over user equipments in the low-energy-efficiency cell and the medium-energy-efficiency cell to the paired cells thereof based on the indication information

FIG. 4

FIG. 5

S601: Obtain original traffic of each of N cells in a first time period, and static energy consumption and dynamic energy consumption of each cell

S602: Calculate costs of each cell based on the original traffic of each cell in the first time period, and the static energy consumption and the dynamic energy consumption of each cell

S603: Determine, based on the costs of the N cells, predicted traffic that minimizes a value of an objective function when the N cells bear total traffic Qt

S606: Remove one or more data items from the objective function

S604: Calculate total energy consumption of the N cells based on the predicted traffic of the N cells, to obtain optimized total energy consumption

No

S605: Determine whether the optimized total energy consumption is the lowest

Yes

S607: Determine predicted traffic of the N cells in the first time period as target traffic of the N cells in the first time period

FIG. 6

Load end point E of the whole network

Migrate-to neighboring cell 3

Migrate-to neighboring cell 4

Migrate-to neighboring cell 5

Low-energy-efficiency cell 1

Mid-level energy-efficiency cell 2

Load start point S of a whole network

FIG. 7

S801: Determine, as a shutdown cell, a cell that is in a low-energy-efficiency cell and whose sum of target traffic in a plurality of time periods is less than a first threshold

S802: Determine, as shutdown time of the shutdown cell, consecutive time periods in which the target traffic of the shutdown cell is less than a second threshold

S803: Determine, as a to-be-adjusted cell, a cell in a low-energy-efficiency cell set and a high-energy-efficiency cell set except the shutdown cell

S804: Determine a target measurement start threshold and a target measurement stop threshold of the to-be-adjusted cell based on target traffic of the to-be-adjusted cell

FIG. 8

First cell

Third cell

Second cell

FIG. 9

Base station energy
saving apparatus 100

Pairing unit 1001

Sending unit
1002

Determining unit
1003

FIG. 10

Base station energy saving apparatus 110

Processor
1101

Memory
1102

Application
program

Communication
interface 1103

FIG. 11

## INTERNATIONAL SEARCH REPORT

| International application No. |
|---|
| **PCT/CN2022/142710** |

**A.    CLASSIFICATION OF SUBJECT MATTER**

H04W52/02(2009.01)i;H04W24/02(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 节能, 基站, 能效, 低, 高, 切换, 迁移, 小区, 关断, 配对, energy saving, low, high, handoff, transfer, cell, base station, shut, pair, KPI

**C.    DOCUMENTS CONSIDERED TO BE RELEVANT**

| Category* | Citation of document, with indication, where appropriate, of the relevant passages | Relevant to claim No. |
|---|---|---|
| X | CN 112312531 A (CHINA UNITED NETWORK COMMUNICATIONS GROUP CO., LTD.) 02 February 2021 (2021-02-02)<br>description, paragraphs [0033]-[0126], and figures 1-8 | 1-20 |
| X | CN 110831134 A (CHINA UNITED NETWORK COMMUNICATIONS GROUP CO., LTD.) 21 February 2020 (2020-02-21)<br>description, paragraphs [0009]-[0012] and [0029]-[0059] | 1-20 |
| X | CN 105357692 A (BEIJING TUOMING COMMUNICATION TECHNOLOGY CO., LTD.) 24 February 2016 (2016-02-24)<br>description, paragraphs [0054]-[0171] | 1-20 |
| A | US 2016142973 A1 (LG ELECTRONICS INC.) 19 May 2016 (2016-05-19)<br>entire document | 1-20 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 February 2023** | **03 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/142710**

| Patent document cited in search report | | | Publication date (day/month/year) | Patent family member(s) | | | Publication date (day/month/year) |
|---|---|---|---|---|---|---|---|
| CN | 112312531 | A | 02 February 2021 | CN | 112312531 | B | 27 September 2022 |
| CN | 110831134 | A | 21 February 2020 | CN | 110831134 | B | 08 July 2022 |
| CN | 105357692 | A | 24 February 2016 | CN | 105357692 | B | 25 December 2018 |
| US | 2016142973 | A1 | 19 May 2016 | WO | 2015020479 | A1 | 12 February 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210061152